# EUROPEAN PATENT SPECIFICATION

(11) **EP 2 778 374 B1**
(45) Date of publication and mention of the grant of the patent: **07.08.2019**
(21) Application number: 14158678.4
(22) Date of filing: 10.03.2014
(51) Int. Cl.: F02C 9/16

(54) **Plasma actuated airfoil cascade airflow directing system**
Plasma betätigtes Luftstromleitsystem einer Strömungsprofilkaskade
Système de guidage d'écoulement actionné par plasma de cascade de profiles aérodynamiques

(30) Priority: 15.03.2013 US 201313843246
(43) Date of publication of application: 17.09.2014
(73) Proprietor: Honeywell International Inc., Morris Plains, NJ 07950 (US)
(72) Inventor: Nolcheff, Nick, Morristown, NJ New Jersey 07962-2245 (US); Frias, Dan, Morristown, NJ New Jersey 07962-2245 (US); Corke, Thomas C., Morristown, NJ New Jersey 07962-2245 (US); Morris, Scott C., Morristown, NJ New Jersey 07962-2245 (US)
(74) Representative: Houghton, Mark Phillip

(56) References cited:
- EP-A2- 1 936 116
- EP-A2- 1 995 171
- WO-A1-2009/018532
- US-A1- 2010 187 366
- US-A1- 2010 284 786

## Description

### TECHNICAL FIELD

Embodiments of the subject matter described herein relate generally to methods, systems and apparatuses for selectively directing airflow in an internal cascade of airfoils. More particularly, embodiments of the subject matter relate to methods, systems and apparatuses using actuated plasma to produce a combined airflow exiting a cascade of internal airfoils in a desired direction.

### BACKGROUND

Gas turbine engines typically comprise an air-compressor-forming section feeding a combustion chamber that produces hot gases to drive the turbine stages downstream. The engine compressor comprises a plurality of moving bladed disks, separated by successive stages of stator cascades of vanes that redirect the airflow. Conventional vanes are generally variable-pitch vanes. The angular position of a variable-pitch vane about its pivotable radial axis can be selectively adjusted in order to improve compressor efficiency. The variable-pitch vanes are oriented using a mechanism known as a variable-pitch mechanism or a VSV which stands for variable stator vane. There are various designs of such mechanisms, but on the whole, they all comprise one or more actuators fixed to the engine casing, synchronization bars or a control shaft, rings surrounding the engine and positioned transversely with respect to the axis thereof, and substantially axial levers also known as pitch control rods, connecting the rings to each of the variable-pitch vanes. The actuators rotate the rings about the engine axis and these cause all the levers to turn synchronously about the vane pivots.

These mechanisms are subjected both to the aerodynamic loads applied to the vanes, which are high, and to loads resulting from friction in the various connections. Further, the mechanisms themselves limit the design of stator cascades of vanes, as clearances are necessary to allow for pivoting the vanes.

It would be desirable to selectively adjust the direction of airflow exiting a stator cascade of vanes without the use of variable-pitch vanes. Further, it would be desirable to obviate the structural requirements of variable-pitch vanes. The use of fixed vanes that provide for control of airflow direction from a cascade of internal vanes could provide for increased performance and reduced mechanical complexity.

US2010/284786 discloses an instability mitigation system comprising a rotor having a row of blades arranged around a centerline axis, and a mitigation system comprising at least one plasma actuator mounted on a blade that facilitates the improvement of the stability of the rotor, and a control system for controlling the operation of the mitigation system. US2010/187366 discloses an airfoil including a plasma actuation surface integrated onto the airfoil surface which is configured to provide high-frequency plasma actuation along the plasma actuation surface such that excitation of the vortex flow or shear flow mitigates the vortex flow or the shear flow associated with the airfoil. EP 1995171 discloses a flow control system and method for use on a Coanda surface. In one embodiment a plurality of plasma actuators are disposed over a Coanda surface of a wing of an aircraft, and are selectively energized to either delay the onset of boundary layer flow separation from the Coanda surface, or to promote flow separation. WO 2009/018532 A1 discloses a plasma generator for tip gap flow control in a compressor.

Hence, there is a need for a method, system and apparatus for selectively directing airflow around internal airfoils. Use of actuated plasma to produce a combined airflow exiting a cascade of internal airfoils would provide for improved cascade performance and durability. Other desirable features and characteristics of the method, system and apparatus will become apparent from the subsequent detailed description and the appended claims, taken in conjunction with the accompanying drawings and the preceding background.

### BRIEF SUMMARY

The invention is set out in accordance with claim 1. Disclosed but not claimed is a system for directing airflow, a gas turbine engine, and a method for directing airflow exiting a cascade of internal airfoils are provided. In an exemplary embodiment, the system for directing airflow includes a cascade of internal structures spanning an airflow path. Each of the internal structures includes a rounded trailing edge. The system further includes at least one plasma generating device positioned on the rounded trailing edge of each internal structure. Also, the system includes a controller configured to selectively energize and de-energize each plasma generating device to selectively alter a direction of local airflow around each internal structure to produce a combined airflow exiting the cascade in a desired direction.

A gas turbine engine is also disclosed but not claimed. The gas turbine engine includes a cascade of internal airfoils. Each of the internal airfoils includes a first surface and an opposite second surface connected at a rounded trailing edge. A first single dielectric barrier discharge plasma actuator is positioned on the first surface and the rounded trailing edge of each of the internal airfoils. Also, a second single dielectric barrier discharge plasma actuator is positioned on the second surface and the rounded trailing edge of each of the internal airfoils. Each first single dielectric barrier discharge plasma actuator and each second single dielectric barrier discharge plasma actuator are selectively energized and de-energized to selectively alter a direction of local airflow around each of the internal airfoils to produce a combined airflow exiting the cascade in a desired direction.

The invention provides a method for directing airflow exiting a cascade of internal airfoils. The method includes coupling a first plasma generating device on a first surface and a rounded trailing edge of each of the internal airfoils, and coupling a second plasma generating device on an opposite second surface and the rounded trailing edge of each of the internal airfoils. Also, the method includes selectively energizing the first plasma generating device and the second plasma generating device on each of the internal airfoils to produce a plasma and to selectively alter a direction of local airflow around each of the internal airfoils to produce a combined airflow exiting the cascade in a desired direction.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures and wherein:
FIG. 1 is a schematic illustration of an example single dielectric barrier discharge plasma actuator for use in a cascade of internal structures in accordance with various embodiments herein;
FIG. 2 is a longitudinal-sectional view of an example gas turbine engine including a cascade of internal structures for use with the plasma actuator of FIG. 1;
FIG. 3 is an enlarged longitudinal-sectional view of the example gas turbine engine of FIG. 2, including a portion of an example cascade of internal structures in accordance with various embodiments herein;
FIG. 4 is a partial view of an internal structure of FIG. 3, including an example arrangement of plasma actuators in accordance with various embodiments herein;
FIG. 5 is a partial view of an exemplary internal structure, including an alternate arrangement of plasma actuators in accordance with various embodiments herein;
FIG. 6 is a partial view of an exemplary internal structure, including an alternate arrangement of plasma actuators in accordance with various embodiments herein;
FIG. 7 is an example illustration of a steady actuation signal and an unsteady actuation signal; and
FIG. 8 is schematic of an example actuator circuit for energizing the single dielectric barrier discharge plasma actuator of FIG. 1.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

As described above, controlling the direction of an airflow exiting a cascade of internal structures, such as airfoils, is provided through selective plasma actuation. Specifically, plasma generating devices are located on trailing edges of internal structures to selectively alter a direction of local airflow around each of the internal structures to produce a combined airflow exiting the cascade in a desired direction. The plasma generating devices can be flush mounted into the structures, producing little or no effect on the flow when not in use, i.e., when turned "off."

Further, as contemplated herein, fixed internal structures are able to selectively adjust the direction of an airflow exiting a cascade of internal structures through the use of plasma actuators. Specifically, the fixed internal structures electrically control local airflow, rather than providing mechanical control of airflow through pivoting or moving the structures as in conventional methods.

It will be appreciated that while the disclosed examples are directed to a compressor for a gas turbine engine utilizing an internal cascade of airfoils, the disclosed methods, systems and apparatuses may be utilized to provide flow control to any suitable device including an internal cascade of structures in an airflow path.

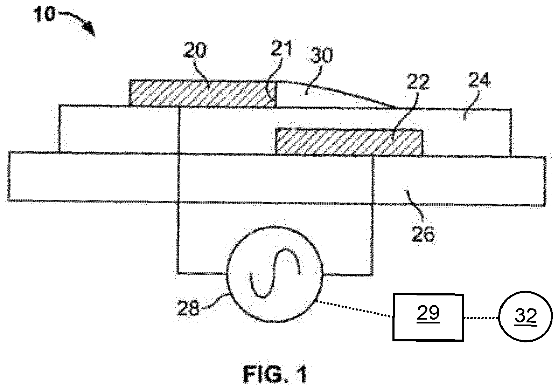

Referring to FIG. 1, a plasma generating device 10 is illustrated. The exemplary plasma generating device 10 is a single dielectric barrier discharge (SDBD) plasma actuator. As shown in FIG. 1, the plasma actuator 10 includes an exposed electrode 20 and an enclosed electrode 22 separated by a dielectric barrier material 24. The electrodes 20, 22 and the dielectric barrier material 24 may be mounted, for example, to a substrate 26. A power supply 28, such as a high voltage AC power supply, is electrically coupled to the plasma actuator 10. Specifically, the power supply 28 is electrically coupled to the electrodes 20, 22. Further, the power supply 28 is connected to a controller 29 that directs the power supply 28 to selectively energize or de-energize the plasma actuator 10.

It will be understood that the exposed electrode 20 may be at least partially covered, while the enclosed electrode may be at least partially exposed. During operation, when the controller 29 causes the power supply to provide an applied AC voltage with a sufficient amplitude, the air surrounding the plasma actuator 10 will locally ionize in the region of the largest electric field (i.e. potential gradient) forming a plasma 30. The plasma 30 generally forms at an edge 21 of the exposed electrode 20. Further, the plasma actuator 10 creates a strong electric field that draws ionized particles toward the plasma actuator 10. As a result, selectively energizing and de-energizing the plasma actuator 10 can modify the behavior of local airflow around the plasma actuator 10. The ability to tailor the actuator-induced flow by the arrangement of the plasma actuator 10 on airfoils allows one to achieve a wide variety of actuation strategies for cascades of internal airfoils as described below.

In the present disclosure, surface mounted SDBD plasma actuators 10 are used to alter the direction of airflow exiting an internal cascade of airfoils by active means. The plasma actuators 10 may be flush mounted to the airfoils, producing little or no effect on flow through the internal cascade when not actuated. In other words, the internal cascade will not cause a loss in design operating point efficiency. Furthermore, the plasma actuators may be implemented in an open or closed loop for control of the airflow exiting the internal cascade. An example open loop implementation energizes or de-energizes the plasma actuator based upon the corrected speed and corrected flow direction exiting the internal cascade. An example closed loop implementation utilizes a sensor or sensors 32 to monitor the internal cascade aerodynamics, synthesizing a stability state variable. Each plasma actuator 10 is selectively energized or de-energized to increase or decrease attraction of local airflow toward the plasma actuator 10. As a result, a boundary separation location of the local airflow relative to the airfoil on which the plasma actuator is mounted is adjusted, resulting in a change in the exit angle of the airflow relative to the airfoil.

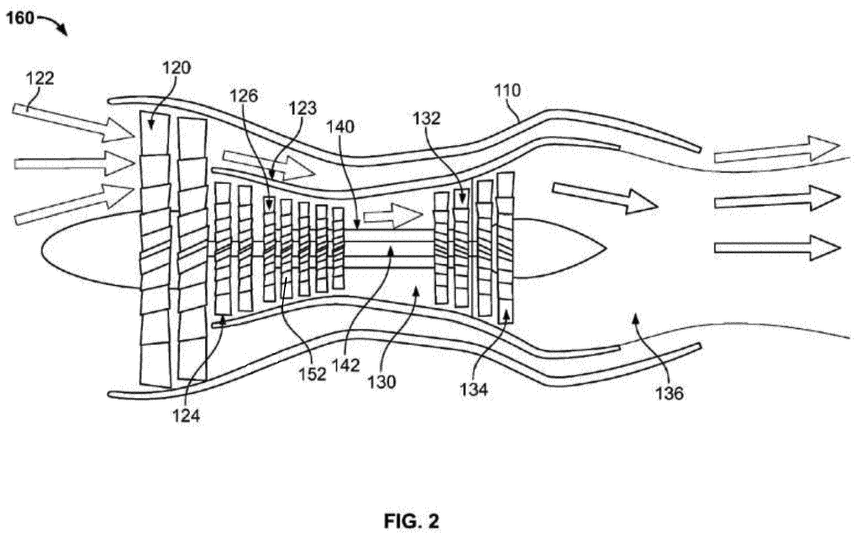

Referring now to FIG. 2, an example gas turbine engine 160 is shown. The gas turbine engine 160 generally includes a housing 110, a fan 120 which receives ambient air 122, a compressor section 123 including a low pressure compressor 124 and a high pressure compressor 126, a combustion chamber 130, a high pressure turbine 132, a low pressure turbine 134, and a nozzle 136 from which combustion gases are discharged from the gas turbine engine 160. The high pressure turbine 132 is joined to the high pressure compressor 126 by a high pressure shaft or rotor 140, while the low pressure turbine 134 is joined to both the low pressure compressor 124 and the fan 120 by a low pressure shaft 142. The low pressure shaft 142 is at least in part rotatably disposed co-axially with and radially inwardly of the high pressure shaft 140. In FIG. 2, the compressor section 123 of the gas turbine engine 160 includes a compressor stator cascade 152.

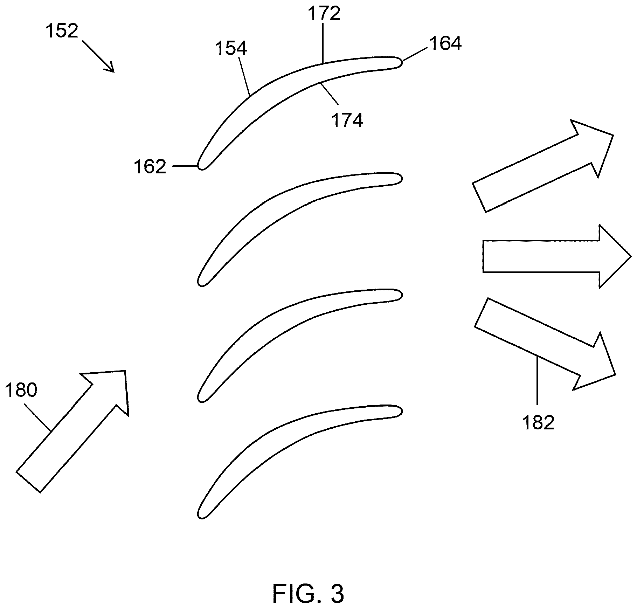

FIG. 3 is a simplified cross sectional schematic of the compressor stator cascade 152. As shown, the compressor stator cascade 152 includes a plurality of internal structures 154, such as airfoils. Each structure 154 extends radially (substantially perpendicular to the plane of the drawing) from a hub to a tip across an airflow path. When shaped like an airfoil, each internal structure 154 extends axially from a leading edge 162 to a trailing edge 164. Further, each structure 154 includes a first surface 172 and a second surface 174. As shown, air, indicated by arrow 180, enters the cascade 152 and is directed by the internal structures 154 to produce a combined airflow, depicted by one of arrows 182, exiting the cascade 152 in a desired direction, i.e., at a desired exit angle with respect to the cascade 152. While FIG. 3 illustrates each structure 154 as an airfoil, it is noted that such cross-sectional shape is not required. Rather, each structure 154 need only be provided with a rounded trailing edge 164, and may have any desired cross sectional shape suitable for use in directing the airflow.

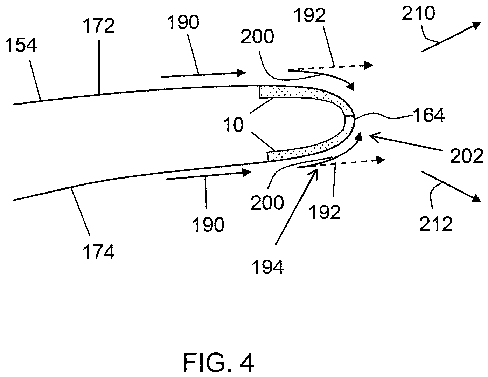

FIG. 4 illustrates the mounting of plasma actuators 10 on an exemplary structure 154 of FIG. 3. As shown, a plasma actuator 10 is mounted flush on the first surface 172 at the rounded trailing edge 164 of the structure 154. Further, a plasma actuator 10 is mounted flush on the opposite second surface 174 at the rounded trailing edge 164. While only two plasma actuators 10 are shown mounted on the exemplary structure 154, it is contemplated that more than two be utilized for each structure 154. Further, it will be understood, however, that the plasma actuators 10 may be strategically placed anywhere along the structure 154, and in any arrangement. Each plasma actuator 10 may extend from the hub to the tip of the structure 154.

Cross-referencing FIGS. 1 and 4, one of the electrodes 22 is embedded within the structure 154, while the other electrode 20 is mounted generally flush with or just below the surface of structure 154. In this configuration, when an AC electric field if applied, the plasma 30 forms on the respective surface of the structure 154.

As shown in FIG. 4, the typical local airflow represented by arrows 190 moves along the surfaces 172, 174. Typically, such airflow would continue in the direction of arrows 192, separating from the structure 154 at an exemplary boundary separation location 194. However, upon selective energizing of the plasma actuators 10, the ionization of air and the creation of an electric field causes the air to flow in the direction of arrows 200. As a result, a new boundary separation location 202 is established toward the trailing edge 164 of the structure 154.

Further, each plasma actuator 10 may be independently and selectively energized to provide a desired exit angle of local airflow from the exemplary structure 154. For example, the plasma actuator 10 on the surface 172 may be energized while the plasma actuator 10 on the surface 174 is de-energized. As a result, the airflow above surface 172 may follow arrow 200, while the airflow below surface 174 may follow arrow 192. In combination, such selective actuation may result in airflow exiting the airfoil in the direction of arrow 210. Likewise, de-energizing the plasma actuator 10 on the surface 172 while energizing the plasma actuator 10 on the surface 174 causes the airflow above surface 172 to follow arrow 192, while the airflow below surface 174 may follow arrow 200. In combination, such selective actuation may result in airflow exiting the airfoil in the direction of arrow 212.

In addition to the preceding binary example, the plasma actuators 10 may be operated at varying selected voltages to provide degrees of attraction of airflow toward either surface 172, 174, allowing for the selection of a tailored exit angle of airflow from the structure 154. Further, coordination of the plasma actuators 10 on all of the internal structures 154 in the cascade 152 provides for the selection of a combined airflow exiting the cascade 152 at a desired direction.

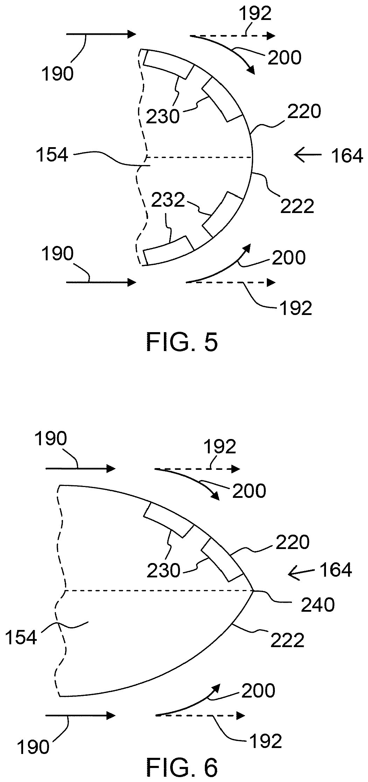

FIG. 5 illustrates the mounting of plasma actuators 10 on an alternate internal structure 154. The internal structure 154 includes a rounded trailing edge 164 having a first side 220 and a second side 222. The internal structure 154 may not have the cross-sectional shape of a conventional airfoil. Rather, the internal structure need only have a rounded trailing edge 164. As used herein a "rounded" edge includes those having circular cross sections, as well as non-circular cross sections such as elliptical cross sections. As shown, two plasma actuators 230 are mounted on the first side 220 of the rounded trailing edge 164 and two plasma actuators 232 are mounted on the second side 222 of the rounded trailing edge 164. Of course, the embodiment of FIG. 5 may include one or more plasma actuators 230 on the first side 220 and no plasma actuators 232 on the second side 222. Further, the arrangement selected for a particular internal structure 154, i.e., zero plasma actuators, one plasma actuator, or more than one plasma actuator on either side, need not be selected for each internal structure 154 in the cascade. Rather, the selected arrangement provides for redirecting local airflow represented by arrows 190 from flowing in the direction of arrows 192 to flow in the direction of arrows 200, and to move the boundary separation location upon selective energizing of the plasma actuators as discussed above.

FIG. 6 illustrates an alternate internal structure 154. As shown, the exemplary internal structure 154 includes a rounded trailing edge 164 that forms a point 240. Specifically, the first side 220 is rounded and the second side 222 is rounded, but the first side 220 and the second side 222 intersect at point 240. As used herein, a "rounded" edge includes those having rounded portions that intersect at a point. As shown, two plasma actuators 230 are mounted on the first side 220 of the rounded trailing edge 164 while no plasma actuators are mounted on the second side 222 of the rounded trailing edge 164. Of course, the embodiment of FIG. 6 may include one or more plasma actuators 232 on the second side 222 and no plasma actuators 230 on the first side 220. Further, the arrangement selected for a particular internal structure 154, i.e., zero plasma actuators, one plasma actuator, or more than one plasma actuator on either side, need not be selected for each internal structure 154 in the cascade. Rather, the selected arrangement provides for redirecting local airflow represented by arrows 190 from flowing in the direction of arrows 192 to flow in the direction of arrows 200, and to move the boundary separation location upon selective energizing of the plasma actuators as discussed above.

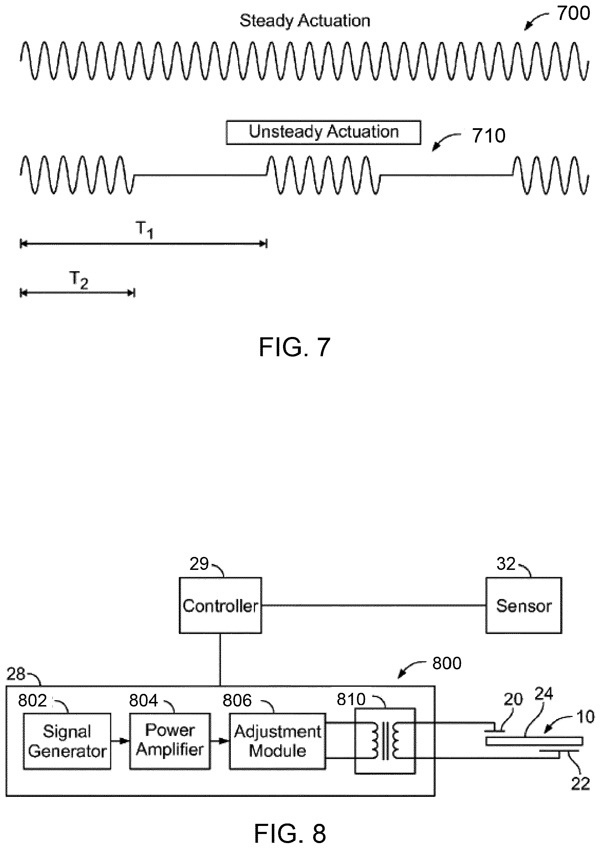

The example SDBD plasma actuator 10 utilizes an AC voltage power supply 28 for its sustenance. However, if the time scale associated with the AC signal driving the formation of the plasma 30 is sufficiently small in relation to any relevant time scales for the flow, the associated body force produced by the plasma 30 may be considered effectively steady. However, unsteady actuation may also be applied and in certain circumstances may pose distinct advantages. Signals for steady versus unsteady actuation are contrasted in FIG. 7. In the illustrated example, an example steady actuation signal 700 in comparison with an unsteady actuation signal 710. Both the steady actuation signal 700 and the unsteady actuation signal 710 utilize the same high frequency sinusoid. Referring to the figure, it is apparent that with regard to the unsteady actuation signal 710, during time interval T₁ the plasma actuator 10 is on only during the sub-interval T₂. Hence, the signal sent to the plasma actuator 10 has a characteristic frequency of f=1/T₁ that will be much lower than that of the sinusoid and will comparable to some relevant frequency of the particular flow that one wishes to control. In addition, an associated duty cycle T₂/T₁ may be defined. It will be understood that the frequency and duty cycle may be independently controlled for a given flow control application as desired.

FIG. 8 shows a sample circuit 800 used to create the high-frequency, high-amplitude AC voltage generated by the AC voltage power supply 28. In this example, a low amplitude, sinusoidal waveform signal is generated by a signal generator 802. The generated signal is supplied to a power amplifier 804. The amplified voltage is then fed through an adjustment module 806 into the primary coil of a transformer 810. The high voltage output for the excitation of the plasma actuators 10 is obtained from the secondary coil of the transformer 810.

As noted above, the example plasma actuator 10 may be implemented in an open or closed loop for control of rotating stall. An example open loop implementation utilizes a controller 29 operatively coupled to the AC voltage power supply 28 to energize or de-energize the plasma actuator 10 based upon the corrected speed and corrected mass flow of the compressor. An example closed loop implementation utilizes a sensor 32 mounted proximate the trailing edge of the cascade 152 to monitor the aerodynamics of airflow exiting the cascade. The exemplary sensor 32 is operatively coupled to the controller 29 to synthesize a stability state variable. In either implementation, the controller 29 selectively energizes or de-energizes each plasma actuator 10 on each structure 154 modify the local airflow around each structure 154.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims.

## Claims

1. A method for directing airflow exiting a cascade (152) of internal airfoils (154) comprising:
coupling a first plasma generating device (10) on a first surface (172) and a rounded trailing edge (164) of each of the internal airfoils;
coupling a second plasma generating device (10) on an opposite second surface (174) and the rounded trailing edge (164) of each of the internal airfoils, wherein for each internal airfoil the first surface and the second surface are connected by the rounded trailing edge;
monitoring the aerodynamics of a combined airflow exiting the cascade with a sensor (32) mounted proximate a trailing edge of the cascade; and
selectively energizing the first plasma generating device and the second plasma generating device on each of the internal airfoils in response to the monitored aerodynamics of the combined airflow exiting the cascade to produce a plasma and to selectively alter a direction of local airflow around each of the internal airfoils to produce a combined airflow exiting the cascade in a desired direction;
wherein selectively energizing the first plasma generating device and the second plasma generating device on each of the internal airfoils in response to the monitored aerodynamics of the combined airflow exiting the cascade comprises performing an open loop control that selectively energizes the first plasma generating device and the second plasma generating device based upon a corrected speed and a corrected flow direction of the combined airflow exiting the cascade.

2. The method of claim 1 wherein selectively energizing the first plasma generating device and the second plasma generating device on each of the internal airfoils moves a boundary separation location (202) of the local airflow around each of the internal airfoils toward the trailing edge of each of the internal airfoils.

3. The method of claim 1 wherein selectively energizing the first plasma generating device and the second plasma generating device on each of the internal airfoils in response to the monitored aerodynamics of the combined airflow exiting the cascade comprises performing a closed loop control.

## Patentansprüche

1. Verfahren zum Leiten eines eine Kaskade (152) von inneren Leitprofilen (154) verlassenden Luftstroms, umfassend:
Koppeln einer ersten Plasmaerzeugungsvorrichtung (10) auf einer ersten Fläche (172) und einer abgerundeten Austrittskante (164) jedes der inneren Leitprofile;
Koppeln einer zweiten Plasmaerzeugungsvorrichtung (10) auf einer gegenüberliegenden zweiten Fläche (174) und der abgerundeten Austrittskante (164) jedes der inneren Leitprofile, wobei für jedes innere Leitprofil die erste Fläche und die zweite Fläche durch die abgerundete Austrittskante verbunden sind;
Überwachen der Aerodynamik eines die Kaskade verlassenden kombinierten Luftstroms mit einem Sensor (32), der nahe einer Austrittskante der Kaskade angebracht ist; und
selektives Erregen der ersten Plasmaerzeugungsvorrichtung und der zweiten Plasmaerzeugungsvorrichtung an jedem der inneren Leitprofile als Reaktion auf die überwachte Aerodynamik des die Kaskade verlassenden kombinierten Luftstroms zum Erzeugen eines Plasmas und zum selektiven Ändern einer Richtung des lokalen Luftstroms um jedes der inneren Leitprofile herum zum Erzeugen eines die Kaskade in einer gewünschten Richtung verlassenden kombinierten Luftstroms;
wobei selektives Erregen der ersten Plasmaerzeugungsvorrichtung und der zweiten Plasmaerzeugungsvorrichtung an jedem der inneren Leitprofile als Reaktion auf die überwachte Aerodynamik des die Kaskade verlassenden kombinierten Luftstroms Durchführen einer Regelung, die die erste Plasmaerzeugungsvorrichtung und die zweite Plasmaerzeugungsvorrichtung basierend auf einer korrigierten Geschwindigkeit und einer korrigierten Strömungsrichtung des die Kaskade verlassenden kombinierten Luftstroms selektiv erregt.

2. Verfahren nach Anspruch 1, wobei selektives Erregen der ersten Plasmaerzeugungsvorrichtung und der zweiten Plasmaerzeugungsvorrichtung an jedem der inneren Leitprofile eine Grenztrennungsstelle (202) des lokalen Luftstroms um jedes der inneren Leitprofile zu der Austrittskante jedes der inneren Leitprofile bewegt.

3. Verfahren nach Anspruch 1, wobei selektives Erregen der ersten Plasmaerzeugungsvorrichtung und der zweiten Plasmaerzeugungsvorrichtung an jedem der inneren Leitprofile als Reaktion auf die überwachte Aerodynamik des die Kaskade verlassenden kombinierten Luftstroms Durchführen einer Regelung umfasst.

## Revendications

1. Procédé pour diriger un flux d'air sortant d'une cascade (152) de profilés aérodynamiques internes (154), comprenant :
l'accouplement d'un premier dispositif de génération de plasma (10) sur une première surface (172) et un bord de fuite arrondi (164) de chacun des profilés aérodynamiques internes ;
l'accouplement d'un deuxième dispositif de génération de plasma (10) sur une deuxième surface opposée (174) et le bord de fuite arrondi (164) de chacun des profilés aérodynamiques internes, la première surface et la deuxième surface étant reliées par le bord de fuite arrondi pour chaque profilé aérodynamique interne ;
la surveillance de l'état aérodynamique d'un flux d'air combiné sortant de la cascade avec un capteur (32) monté à proximité d'un bord de fuite de la cascade ; et
l'activation sélective du premier dispositif de génération de plasma et du deuxième dispositif de génération de plasma sur chacun des profilés aérodynamiques internes en réponse à l'état aérodynamique surveillé du flux d'air combiné sortant de la cascade pour produire un plasma et pour modifier de manière sélective la direction du flux d'air local autour de chacun des profilés aérodynamiques internes pour produire un flux d'air combiné sortant de la cascade dans une direction souhaitée ;
l'activation sélective du premier dispositif de génération de plasma et du deuxième dispositif de génération de plasma sur chacun des profilés aérodynamiques internes en réponse à l'état aérodynamique surveillé du flux d'air combiné sortant de la cascade comprenant la réalisation d'une commande en boucle ouverte qui active de manière sélective le premier dispositif de génération de plasma et le deuxième dispositif de génération de plasma sur la base d'une vitesse corrigée et d'une direction d'écoulement corrigée du flux d'air combiné sortant de la cascade.

2. Procédé selon la revendication 1, dans lequel l'activation sélective du premier dispositif de génération de plasma et du deuxième dispositif de génération de plasma sur chacun des profilés aérodynamiques internes déplace un emplacement de séparation limite (202) du flux d'air local autour de chacun des profilés aérodynamiques internes vers le bord de fuite de chacun des profilés aérodynamiques internes.

3. Procédé selon la revendication 1, dans lequel l'activation sélective du premier dispositif de génération de plasma et du deuxième dispositif de génération de plasma sur chacun des profilés aérodynamiques internes en réponse à l'état aérodynamique surveillé du flux d'air combiné sortant de la cascade comprend la réalisation d'une commande en boucle fermée.
